# FASCICULE DE BREVET EUROPEEN

(11) **EP 2 721 979 B1**
(45) Date de publication et mention de la délivrance du brevet: **18.11.2015**
(21) Numéro de dépôt: 13188984.2
(22) Date de dépôt: 16.10.2013
(51) Int. Cl.: A47J 43/07

(54) **Appareil électroménager de préparation culinaire comportant un dispositif d'introduction d'aliments**
Elektrohaushaltsgerät zur Essenszubereitung, das eine Vorrichtung zur Einführung von Lebensmitteln umfasst
Kitchen appliance comprising a food-insertion device

(30) Priorité: 18.10.2012 FR 1259959
(43) Date de publication de la demande: 23.04.2014
(73) Titulaire: SEB S.A., 69130 Ecully (FR)
(72) Inventeur: Delavaud, Fabien, 64510 Baliros (FR); Raude, Christian, 64160 Buros (FR); Suberbie, Nicolas, 65360 Momeres (FR); Ginestet, David, 65000 Tarbes (FR)
(74) Mandataire: Cémeli, Eric Philippe Laurent

(56) Documents cités:
- DE-A1-102010 026 974
- DE-C1- 19 702 921
- DE-U1-202007 000 809
- FR-A1- 2 967 035

## Description

La présente invention concerne le domaine technique des appareils électroménagers de préparation culinaire comportant une enceinte de travail présentant un dispositif d'introduction d'aliments, ladite enceinte de travail logeant un outil de travail pour transformer les aliments introduits.

La présente invention concerne notamment, mais non exclusivement, les appareils électroménagers de préparation culinaire comportant une enceinte de travail présentant une sortie d'aliments transformés, permettant un travail en continu.

La présente invention concerne notamment les appareils pour presser, râper, émincer, trancher, broyer les aliments, tels que les pressoirs, centrifugeuses, coupe-légumes, râpes, hachoirs, robots multifonctions.

Le document DE102010026974 divulgue un appareil de préparation culinaire comportant un outil de travail disposé dans une enceinte de travail comprenant un couvercle présentant plusieurs goulottes pour introduire des aliments dans l'enceinte de travail. Les goulottes présentent des sections et des hauteurs différentes. Ces dispositions permettent d'offrir plusieurs possibilités pour l'introduction des aliments dans l'enceinte de travail. Toutefois ces dispositions sont plutôt adaptées pour les aliments allongés présentant une hauteur supérieure à la section de la goulotte.

Un objet de la présente invention est de faciliter l'introduction d'aliments de petite taille dans l'enceinte de travail d'un appareil électroménager de préparation d'aliments.

Un autre objet de la présente invention est d'améliorer le débit d'introduction d'aliments dans l'enceinte de travail d'un appareil électroménager de préparation d'aliments.

Ces objets sont atteints avec un appareil électroménager de préparation culinaire comportant une enceinte de travail comprenant un couvercle, un outil de travail disposé dans l'enceinte de travail, le couvercle présentant au moins deux goulottes pour introduire des aliments dans l'enceinte de travail, du fait que le couvercle comporte un collecteur supérieur débouchant dans au moins deux des goulottes. La section des goulottes des appareils électroménagers de préparation culinaire est limitée pour des questions normatives. L'utilisation de plusieurs goulottes permet d'augmenter le débit d'introduction d'aliments dans l'enceinte de travail. L'utilisation d'un collecteur supérieur selon l'invention permet de faciliter la répartition des aliments dans les différentes goulottes, notamment pour les aliments en morceaux ou de petite taille.

Avantageusement, le collecteur supérieur présente au moins une portion de bordure supérieure pour contenir des aliments. En complément ou en alternative, le collecteur supérieur peut présenter une surface inclinée vers les goulottes.

Selon une forme de réalisation avantageuse, le collecteur supérieur présente un bord supérieur annulaire. Le bord supérieur annulaire entoure ainsi l'admission supérieure des goulottes.

Selon une forme de réalisation avantageuse, le collecteur supérieur présente plusieurs ouvertures, chaque ouverture débouchant dans une des goulottes. En alternative, le collecteur supérieur pourrait notamment présenter au moins une ouverture débouchant dans au moins deux des goulottes.

Selon une forme de réalisation préférée, le couvercle présente au moins trois goulottes agencées autour d'un axe de rotation de l'outil de travail. La partie centrale du couvercle présente moins d'intérêt pour l'introduction des aliments car la vitesse linéaire de l'outil de travail est moindre qu'en périphérie. De préférence, le couvercle présente entre trois et six goulottes agencées autour d'un axe de rotation de l'outil de travail.

Avantageusement alors, le couvercle comporte un organe de guidage pour recevoir une extrémité supérieure de l'outil de travail centrée selon l'axe de rotation, ledit organe de guidage étant entouré par les goulottes. Cette disposition permet d'obtenir un appareil performant sans affecter l'alimentation de l'enceinte de travail.

Selon une forme de réalisation avantageuse, l'appareil comporte un poussoir pour pousser les aliments dans chacune des goulottes. Un même poussoir peut ainsi être utilisé successivement avec les différentes goulottes. De préférence alors, les goulottes présentent des sections internes identiques.

Avantageusement, les goulottes présentent une section interne non circulaire. Cette disposition permet de bloquer le poussoir en rotation dans la goulotte.

Selon une forme de réalisation avantageuse, les goulottes sont formées dans une même pièce. Cette disposition contribue à renforcer la solidité du couvercle.

Selon une forme de réalisation avantageuse, le collecteur supérieur est rapporté sur les goulottes. En d'autres termes, le collecteur supérieur et les goulottes sont issus de pièces différentes. Cette disposition permet de simplifier la réalisation du couvercle. Si désiré, le collecteur supérieur peut être amovible par rapport aux goulottes, ou au contraire être fixé aux goulottes.

Selon une forme de réalisation avantageuse, l'enceinte de travail est disposée sur un boîtier motorisé présentant une sortie d'entraînement pour entraîner en rotation l'outil de travail disposé dans l'enceinte de travail. Cette disposition permet de libérer la surface du couvercle.

Selon une forme de réalisation remarquable, l'outil de travail forme une vis de pressage entrainée en rotation, et l'enceinte de travail comporte un organe de filtration délimitant un premier compartiment logeant la vis de pressage et un deuxième compartiment pour recueillir au moins une partie des aliments traités par la vis de pressage. L'extraction de jus peut notamment être réalisée à partir de petits fruits ou de morceaux de fruits après retrait des noyaux. L'introduction de tels aliments dans l'appareil peut être fastidieuse ; le collecteur supérieur permet d'utiliser une quantité importante d'aliments en les introduisant progressivement dans l'enceinte de travail selon le rythme désiré.

Avantageusement alors, la vis de pressage est entourée par l'organe de filtration. Cette disposition permet de faciliter l'obtention d'un débit important pour les aliments pressés.

Selon une forme de réalisation préférée, la vis de pressage présente deux filets principaux définissant deux passages distincts pour les aliments introduits dans l'enceinte de travail par les goulottes. Cette disposition permet de mieux équilibrer les efforts autour de la vis de pressage, et contribue aussi à l'obtention d'un débit important pour les aliments pressés.

Avantageusement encore, l'enceinte de travail comporte au moins une sortie pour décharger au moins une partie des aliments traités par l'outil de travail. Si désiré, l'enceinte de travail peut comporter une première sortie pour le jus et une deuxième sortie pour les résidus de pressage.

Un autre objet de la présente invention est de proposer un appareil électroménager de préparation culinaire comportant une enceinte de travail logeant une vis de pressage, dans lequel la motorisation est adaptée à l'amélioration du débit d'introduction d'aliments dans l'enceinte de travail.

Cet objet est atteint avec un appareil électroménager de préparation culinaire comportant une enceinte de travail disposée sur un boîtier motorisé présentant une sortie d'entraînement pour entraîner en rotation un outil de travail disposé dans l'enceinte de travail, l'outil de travail formant une vis de pressage entrainée en rotation et l'enceinte de travail comportant un organe de filtration délimitant un premier compartiment logeant la vis de pressage et un deuxième compartiment pour recueillir au moins une partie des aliments traités par la vis de pressage, le boîtier motorisé logeant un moteur électrique relié à la sortie d'entraînement par l'intermédiaire d'un dispositif de transmission, du fait que le dispositif de transmission comporte un réducteur épicycloïdal à double étage comprenant un premier étage entrainé par le moteur électrique, un deuxième étage entrainé par le premier étage, le deuxième étage entraînant la sortie d'entraînement. Cette disposition permet d'obtenir un appareil électroménager de préparation culinaire de type pressoir à vis comportant un réducteur robuste et compact.

Selon une forme de réalisation préférée, le premier étage comporte au moins un premier pignon coopérant d'une part avec un premier axe d'entraînement monté sur un arbre de sortie du moteur électrique et d'autre part avec une première paroi interne dentée d'un premier élément de boîtier, le premier pignon étant monté libre en rotation sur un premier support rotatif présentant un premier axe de sortie coaxial avec l'arbre de sortie du moteur électrique, en ce que le deuxième étage comporte au moins un deuxième pignon coopérant d'une part avec un deuxième axe d'entraînement monté sur le premier axe de sortie et d'autre part avec une deuxième paroi interne dentée d'un deuxième élément de boîtier, le deuxième pignon étant monté libre en rotation sur un deuxième support rotatif présentant un deuxième axe de sortie coaxial avec le premier axe de sortie, le deuxième axe de sortie formant la sortie d'entraînement.

Si désiré, l'enceinte de travail peut comprendre un couvercle présentant au moins une goulotte pour introduire des aliments dans l'enceinte de travail. De préférence, l'enceinte de travail comprend un couvercle présentant au moins deux goulottes pour introduire des aliments dans l'enceinte de travail.

L'invention sera mieux comprise à l'étude d'un exemple de réalisation et d'une variante, pris à titre nullement limitatif, illustré dans les figures annexées, dans lesquelles :
- la figure 1 illustre un exemple d'appareil électroménager de préparation culinaire selon l'invention, représenté en élévation,
- la figure 2 est une vue de face de l'appareil électroménager de préparation culinaire illustré sur la figure 1,
- la figure 3 est une vue de droite de l'appareil électroménager de préparation culinaire illustré sur les figures 1 et 2,
- la figure 4 est une vue arrière de l'appareil électroménager de préparation culinaire illustré sur les figures 1 à 3,
- la figure 5 est une vue de gauche de l'appareil électroménager de préparation culinaire illustré sur les figures 1 à 4,
- la figure 6 est une vue de dessus de l'appareil électroménager de préparation culinaire illustré sur les figures 1 à 5,
- la figure 7 est une vue en perspective d'un outil de travail de l'appareil électroménager de préparation culinaire illustré sur les figures 1 à 6,
- la figure 8 est une vue en coupe verticale de l'appareil électroménager de préparation culinaire illustré sur les figures 1 à 6,
- la figure 9 est une vue en perspective de dessus du couvercle de l'appareil illustré sur les figures 1 à 6 et 8,
- la figure 10 est une vue en perspective de dessous du couvercle de l'appareil illustré sur les figures 1 à 6 et 8,
- la figure 11 est une vue agrandie d'une partie de la figure 8,
- la figure 12 est une vue en perspective de dessus d'une variante de réalisation d'un couvercle appartenant à un appareil électroménager de préparation culinaire selon l'invention,
- la figure 13 est une autre vue en perspective de dessus du couvercle illustré sur la figure 12.

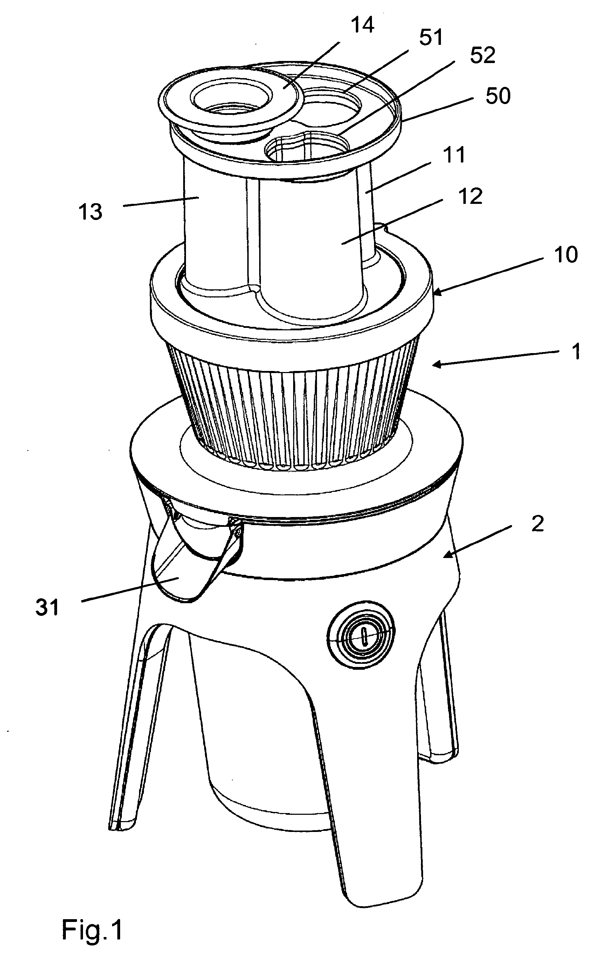

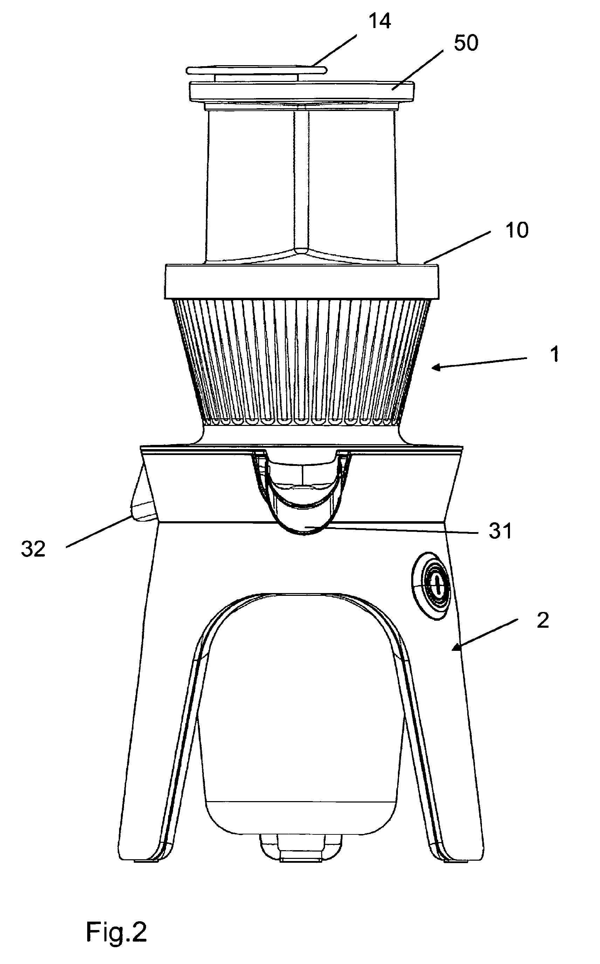

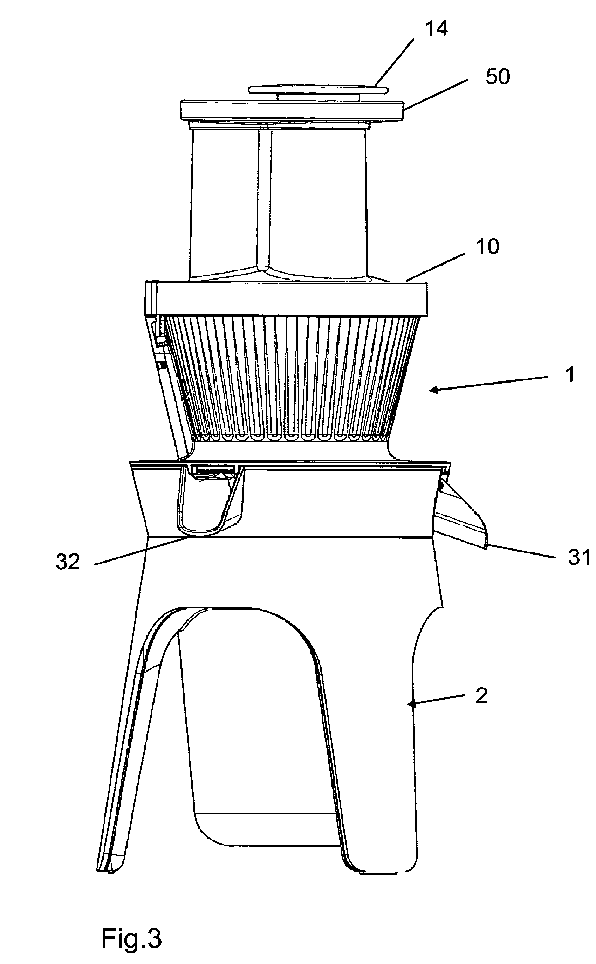

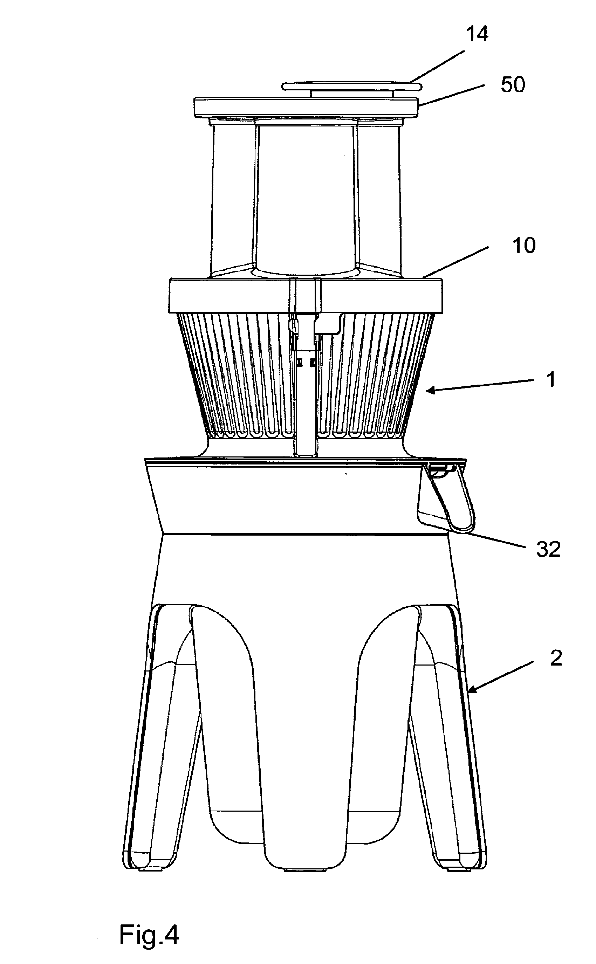

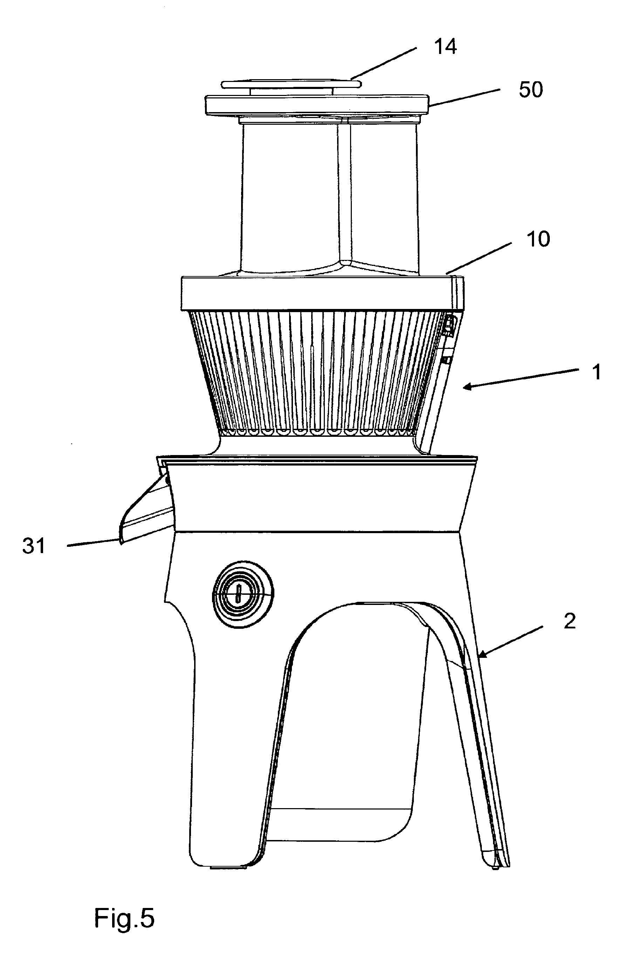

L'appareil électroménager de préparation culinaire illustré sur les figures 1 à 6 et 8 est un appareil d'extraction de jus alimentaire comportant une enceinte de travail 1 comprenant un couvercle 10 présentant au moins deux goulottes 11, 12, 13 pour introduire des aliments dans l'enceinte de travail.

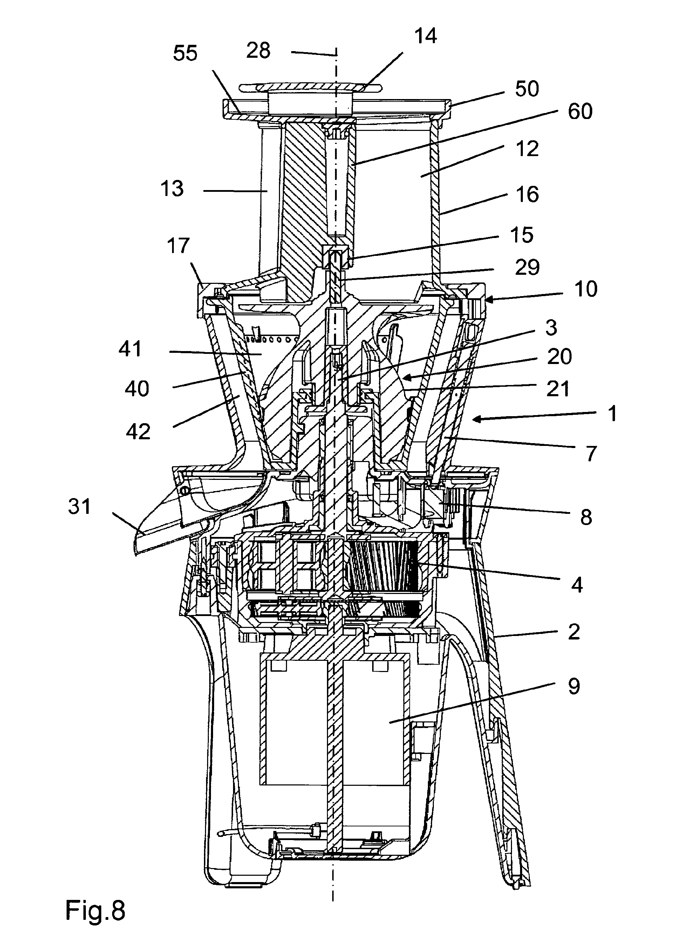

L'appareil électroménager de préparation culinaire illustré sur les figures 1 à 6 et 8 comporte un poussoir 14 pour pousser les aliments dans chacune des goulottes 11, 12, 13. Les goulottes 11, 12, 13 ont avantageusement des sections internes identiques. De préférence, chacune des goulottes 11, 12, 13 présente une section interne non circulaire, pour éviter la rotation du poussoir 14 dans les goulottes 11, 12, 13. Tel que bien visible sur les figures 8, 9 et 10, le couvercle 10 comporte un noyau central 60 s'étendant à l'intérieur de chacune des goulottes 11, 12, 13. Les goulottes 11, 12, 13 sont agencées autour du noyau central 60. La section interne des goulottes 11, 12, 13 est principalement circulaire, la section interne des goulottes 11, 12, 13 étant circulaire en dehors du noyau central 60.

Tel que visible sur la figure 8, un outil de travail 20 est disposé dans l'enceinte de travail 1. Plus particulièrement dans l'exemple de réalisation illustré sur les figures 1 à 10, l'enceinte de travail 1 est disposée sur un boîtier motorisé 2 présentant une sortie d'entraînement 3 pour entraîner en rotation l'outil de travail 20 disposé dans l'enceinte de travail 1. Le boîtier motorisé 2 forme un socle sur lequel repose l'enceinte de travail 1. Le boîtier motorisé 2 loge un moteur électrique 9, représenté schématiquement. Le moteur électrique 9 est relié à la sortie d'entraînement 3, si désiré par l'intermédiaire d'un dispositif de transmission 4.

Tel que bien visible sur la figure 8, le dispositif de transmission 4 comporte un réducteur épicycloïdal à double étage 70 comprenant un premier étage 71 entrainé par le moteur électrique 9, un deuxième étage 72 entrainé par le premier étage 71, le deuxième étage 72 entraînant la sortie d'entraînement 3.

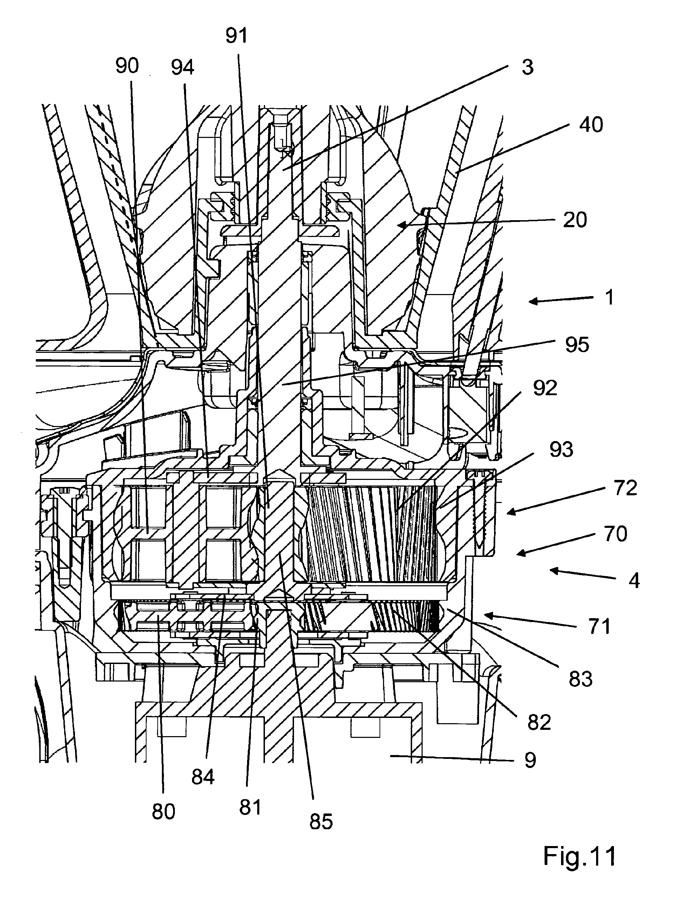

Tel que mieux visible sur la figure 11, le premier étage 71 comporte au moins un premier pignon 80 coopérant d'une part avec un premier axe d'entraînement 81 monté sur un arbre de sortie du moteur électrique 9 et d'autre part avec une première paroi interne dentée 82 d'un premier élément de boîtier 83. Le premier pignon 80 est monté libre en rotation sur un premier support rotatif 84 présentant un premier axe de sortie 85 coaxial avec l'arbre de sortie du moteur électrique 9. Le deuxième étage 72 comporte au moins un deuxième pignon 90 coopérant d'une part avec un deuxième axe d'entraînement 91 monté sur le premier axe de sortie 85 et d'autre part avec une deuxième paroi interne dentée 92 d'un deuxième élément de boîtier 93. Le deuxième pignon 90 est monté libre en rotation sur un deuxième support rotatif 94 présentant un deuxième axe de sortie 95 coaxial avec le premier axe de sortie 85. Le deuxième axe de sortie 95 forme la sortie d'entrainement 3.

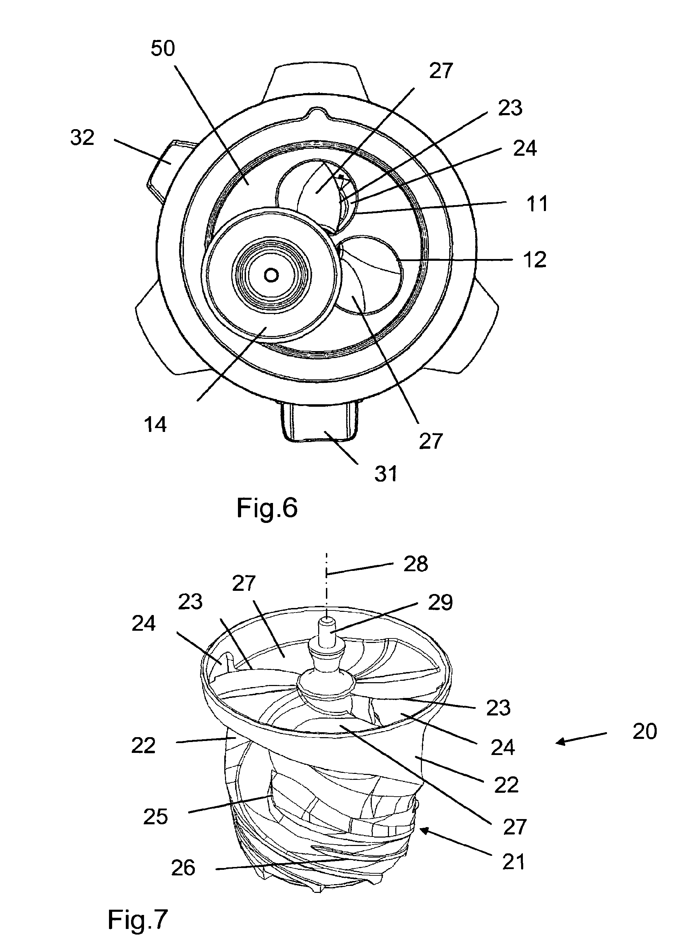

Tel que mieux visible sur la figure 7, l'outil de travail 20 forme une vis de pressage 21. La vis de pressage 21 présente avantageusement deux filets principaux 22 comportant chacun une extrémité supérieure de coupe 23. Les deux filets principaux 22 définissent deux passages 24 distincts pour les aliments introduits dans l'enceinte de travail par les goulottes 11, 12, 13. Des filets secondaires 25, 26 peuvent être intercalés entre les filets principaux 22. La partie supérieure de chaque filet principal 22 forme une surface d'appui 27 pour porter les aliments introduits par l'une des goulottes 11, 12, 13 avant leur sectionnement par l'extrémité supérieure de coupe 23 adjacente. Tel que visible sur la figure 6, les surfaces d'appui 27 sont agencées en regard des conduits formés par les goulottes 11, 12, 13.

Plus particulièrement dans l'exemple de réalisation illustré sur les figures 1 à 10, l'enceinte de travail comporte un organe de filtration 40 délimitant un premier compartiment 41 logeant la vis de pressage 21 et un deuxième compartiment 42 pour recueillir au moins une partie des aliments traités par la vis de pressage 21. La vis de pressage 21 entrainée en rotation dans l'enceinte de travail 1 presse les aliments contre l'organe de filtration 40 pour extraire le jus qui peut alors s'écouler dans le deuxième compartiment 42. Dans la forme de réalisation préférée illustrée sur les figures 1 à 10, la vis de pressage 21 est entourée par l'organe de filtration 40.

De manière avantageuse, l'enceinte de travail 1 comporte au moins une sortie 31, 32 pour décharger au moins une partie des aliments traités par l'outil de travail 20. Dans l'exemple de réalisation illustré sur les figures 1 à 10, la sortie 31 communique avec le deuxième compartiment 42 pour décharger le jus ; l'autre sortie 32 communique avec le premier compartiment 41 pour décharger les résidus.

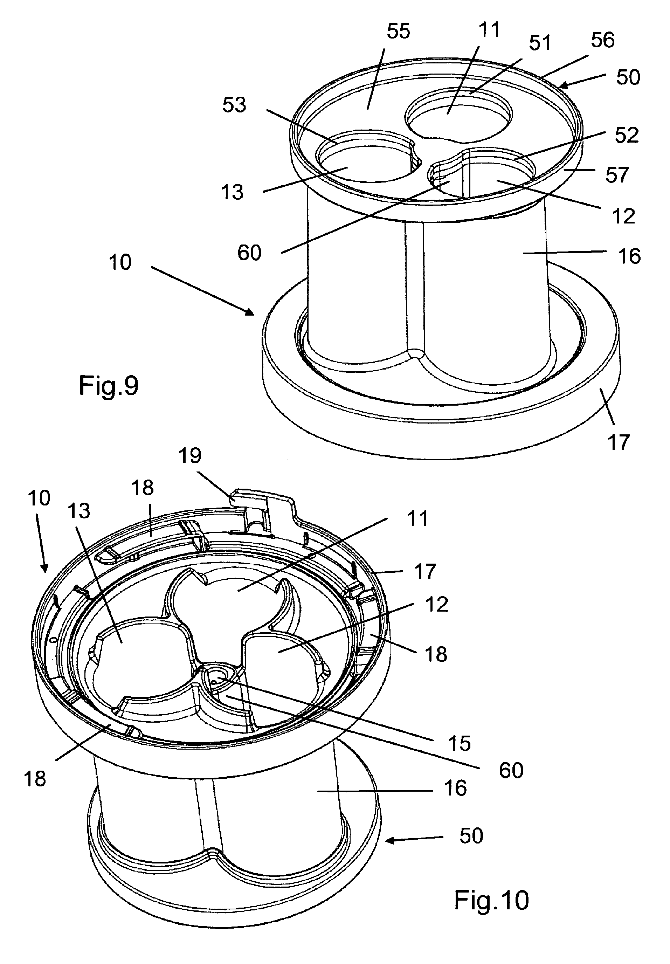

Selon une caractéristique de l'invention, le couvercle 10 comporte un collecteur supérieur 50 débouchant dans au moins deux des goulottes 11, 12, 13. En d'autres termes, le collecteur supérieur 50 forme un dispositif de collecte d'aliments commun à au moins deux goulottes. L'utilisateur peut ainsi disposer des aliments et/ou des morceaux d'aliments sur le collecteur supérieur 50 sans nécessairement choisir la ou les goulottes utilisées pour l'introduction des aliments dans l'enceinte de travail 1. De manière préférée, le collecteur supérieur 50 débouche dans toutes les goulottes 11, 12, 13. Tel que mieux visible sur la figure 9, le collecteur supérieur 50 présente plusieurs ouvertures 51, 52, 53 et chaque ouverture 51, 52, 53 débouche dans une des goulottes 11, 12, 13. A titre de variante, le collecteur supérieur pourrait présenter au moins une ouverture commune à plusieurs goulottes.

Selon une forme préférée de réalisation, le couvercle 10 présente au moins trois goulottes 11, 12, 13 agencées autour d'un axe de rotation 28 de l'outil de travail 20. Tel que visible sur la figure 8, le couvercle 10 comporte un organe de guidage 15 pour recevoir une extrémité supérieure 29 de l'outil de travail 20 centrée selon l'axe de rotation 28. Tel que mieux visible sur la figure 10, ledit organe de guidage 15 est entouré par les goulottes 11, 12, 13.

Dans l'exemple de réalisation illustré sur les figures 1 à 10, les goulottes 11, 12, 13 sont agencées symétriquement autour de l'axe de rotation 28 de l'outil de travail 20. Les goulottes 11, 12, 13 s'étendent parallèlement à l'axe de rotation 28 de l'outil de travail 20, tel que visible sur la figure 8.

Dans l'exemple de réalisation illustré sur les figures 1 à 10, les goulottes 11, 12, 13 sont formées dans une même pièce 16 agencée entre le collecteur supérieur 50 et un anneau 17 comportant des organes de verrouillage 18 ainsi qu'un organe de sécurité 19 pour repousser une tige de commande 7 actionnant un interrupteur 8 autorisant l'alimentation du moteur électrique 9 entrainant la sortie d'entraînement 3 lorsque le couvercle 10 est correctement verrouillé.

Dans l'exemple de réalisation illustré sur les figures 1 à 10, le collecteur supérieur 50 est rapporté sur les goulottes 11, 12, 13. Si désiré, le collecteur supérieur 50 peut être amovible par rapport aux goulottes 11, 12, 13.

Dans l'exemple de réalisation illustré sur les figures 1 à 10, le collecteur supérieur 50 entoure les goulottes 11, 12, 13. Le collecteur supérieur 50 est circulaire. Le collecteur supérieur 50 forme un plateau 55 légèrement incliné vers les goulottes 11, 12, 13 par rapport au plan d'appui de l'appareil. Si désiré, le plateau 55 peut notamment être plan ou être davantage incliné vers les goulottes 11, 12, 13 par rapport au plan d'appui de l'appareil, jusqu'à former un entonnoir.

Selon une forme de réalisation avantageuse, le collecteur supérieur 50 présente au moins une portion de bordure supérieure 56 pour contenir des aliments. Dans la forme de réalisation préférée illustrée sur les figures 1 à 10, le collecteur supérieur 50 présente un bord supérieur annulaire 57.

L'appareil selon l'invention s'utilise et fonctionne de la manière suivante.

L'utilisateur positionne l'outil de travail 20 dans l'enceinte de travail 1 et ferme le couvercle 10. L'utilisateur peut ensuite introduire des aliments dans l'une ou l'autre des goulottes 11, 12, 13, et/ou disposer des aliments sur le plateau 55 du collecteur supérieur 50 pour les introduire progressivement dans les goulottes 11, 12, 13. L'utilisateur peut ainsi obtenir un débit d'introduction d'aliments dans l'enceinte de travail 1 adapté au débit de traitement des aliments de l'outil de travail 20. Le collecteur supérieur est par exemple bien adapté à l'utilisation de petits aliments ou de morceaux d'aliments non manipulés individuellement.

A titre de variante, le collecteur supérieur 50 peut présenter au moins trois ouvertures agencées autour d'un organe de guidage 15 de l'extrémité supérieure 29 de l'axe de rotation 28 de l'outil de travail 20.

A titre de variante, le couvercle 10 peut comporter au moins une lame de coupe agencée dans une des goulottes 11, 12, 13, et/ou au moins une lame de coupe agencée entre deux goulottes.

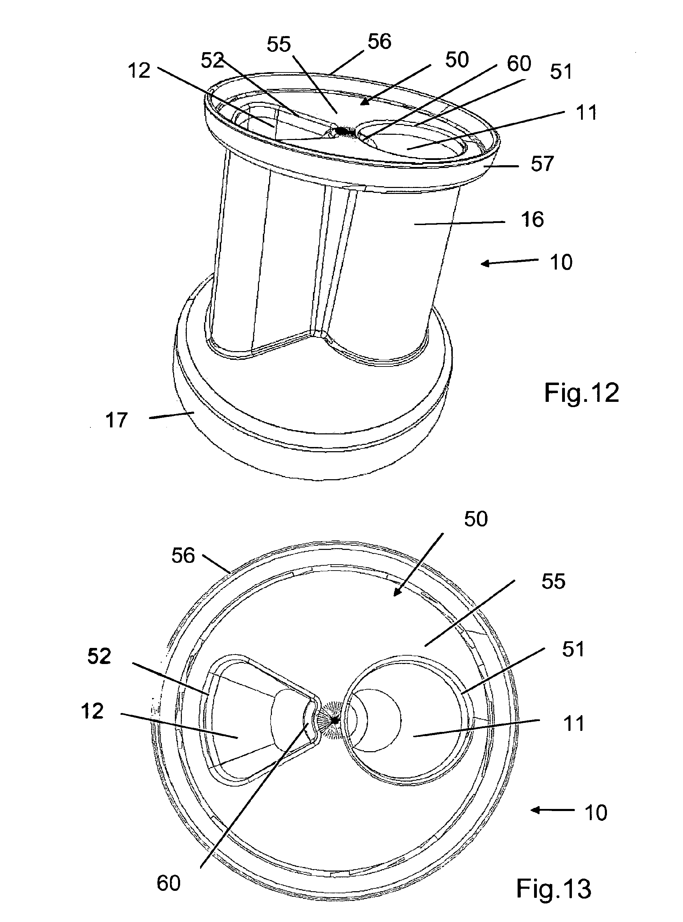

Le couvercle 10 illustré sur les figures 12 et 13 diffère du couvercle 10 illustré sur les figures 1 à 6 et 8 à 10 en ce qu'il comporte deux goulottes 11, 12. Le collecteur supérieur 50 débouche dans les deux goulottes 11, 12. Ainsi chaque ouverture 51, 52 débouche dans l'une des goulottes 11, 12. Par ailleurs, les deux goulottes 11, 12 sont agencées de part et d'autre de l'axe du couvercle 10 correspondant à l'axe de rotation de l'outil de travail. Les goulottes 11, 12 présentent deux géométries distinctes, la section de la goulotte 11 étant principalement circulaire, et la section de la goulotte 12 étant principalement triangulaire. Le couvercle 10 comporte un noyau central 60 s'étendant à l'intérieur de chacune des goulottes 11, 12. Le noyau central 60 est agencé entre les goulottes 11, 12. Les goulottes 11, 12 sont formées dans une même pièce 16 agencée entre le collecteur supérieur 50 et un anneau 17. Le collecteur supérieur 50 est circulaire et forme un plateau 55 de préférence légèrement incliné vers les goulottes 11, 12 par rapport au plan d'appui de l'appareil auquel appartient le couvercle 10. Le collecteur 50 présente une bordure supérieure 56 pour contenir des aliments formée par un bord supérieur annulaire 57.

La présente invention n'est nullement limitée aux exemples de réalisation décrits, mais englobe de nombreuses modifications dans le cadre des revendications.

## Revendications

1. Appareil électroménager de préparation culinaire comportant une enceinte de travail (1) comprenant un couvercle (10), un outil de travail (20) disposé dans l'enceinte de travail (1), le couvercle (10) présentant au moins deux goulottes (11 ; 12 ; 13) pour introduire des aliments dans l'enceinte de travail (1), **caractérisé en ce que** le couvercle (10) comporte un collecteur supérieur (50) débouchant dans au moins deux des goulottes (11 ; 12 ; 13).

2. Appareil électroménager de préparation culinaire selon la revendication 1, **caractérisé en ce que** le collecteur supérieur (50) présente au moins une portion de bordure supérieure (56) pour contenir des aliments.

3. Appareil électroménager de préparation culinaire selon l'une des revendications 1 ou 2, **caractérisé en ce que** le collecteur supérieur (50) présente un bord supérieur annulaire (57).

4. Appareil électroménager de préparation culinaire selon l'une des revendications 1 à 3, **caractérisé en ce que** le collecteur supérieur (50) présente plusieurs ouvertures (51 ; 52 ; 53) et **en ce que** chaque ouverture (51 ; 52 ; 53) débouche dans une des goulottes (11 ; 12 ; 13).

5. Appareil électroménager de préparation culinaire selon l'une des revendications 1 à 4, **caractérisé en ce que** le couvercle (10) présente au moins trois goulottes (11 ; 12 ; 13) agencées autour d'un axe de rotation (28) de l'outil de travail (20).

6. Appareil électroménager de préparation culinaire selon la revendication 5, **caractérisé en ce que** le couvercle (10) comporte un organe de guidage (15) pour recevoir une extrémité supérieure (29) de l'outil de travail (20) centrée selon l'axe de rotation (28), ledit organe de guidage (15) étant entouré par les goulottes (11 ; 12 ; 13).

7. Appareil électroménager de préparation culinaire selon l'une des revendications 1 à 6, **caractérisé en ce qu'il** comporte un poussoir (14) pour pousser les aliments dans chacune des goulottes (11 ; 12 ; 13).

8. Appareil électroménager de préparation culinaire selon l'une des revendications 1 à 7, **caractérisé en ce que** les goulottes (11 ; 12 ; 13) présentent une section interne non circulaire.

9. Appareil électroménager de préparation culinaire selon l'une des revendications 1 à 8, **caractérisé en ce que** les goulottes (11 ; 12 ; 13) sont formées dans une même pièce (16).

10. Appareil électroménager de préparation culinaire selon l'une des revendications 1 à 9, **caractérisé en ce que** le collecteur supérieur (50) est rapporté sur les goulottes (11 ; 12 ; 13).

11. Appareil électroménager de préparation culinaire selon l'une des revendications 1 à 10, **caractérisé en ce que** l'enceinte de travail (1) est disposée sur un boîtier motorisé (2) présentant une sortie d'entraînement (3) pour entraîner en rotation l'outil de travail (20) disposé dans l'enceinte de travail (1).

12. Appareil électroménager de préparation culinaire selon l'une des revendications 1 à 11, **caractérisé en ce que** l'outil de travail (20) forme une vis de pressage (21) entrainée en rotation et **en ce que** l'enceinte de travail (1) comporte un organe de filtration (40) délimitant un premier compartiment (41) logeant la vis de pressage (21) et un deuxième compartiment (42) pour recueillir au moins une partie des aliments traités par la vis de pressage (21).

13. Appareil électroménager de préparation culinaire selon la revendication 12, **caractérisé en ce que** la vis de pressage (21) est entourée par l'organe de filtration (40).

14. Appareil électroménager de préparation culinaire selon l'une des revendications 12 ou 13, **caractérisé en ce que** la vis de pressage (21) présente deux filets principaux (22) définissant deux passages (24) distincts pour les aliments introduits dans l'enceinte de travail (1) par les goulottes (11 ; 12 ; 13).

15. Appareil électroménager de préparation culinaire selon l'une des revendications 1 à 14, **caractérisé en ce que** l'enceinte de travail (1) comporte au moins une sortie (31 ; 32) pour décharger au moins une partie des aliments traités par l'outil de travail (20).

## Patentansprüche

1. Elektrohaushaltsgerät zur Zubereitung von Speisen mit einem Arbeitsraum (1), der einen Deckel (10) und ein Arbeitswerkzeug (20) umfasst, das in dem Arbeitsraum (1) angeordnet ist, wobei der Deckel (10) zumindest zwei Schachte (11, 12, 13) zum Einfüllen der Nahrungsmittel in den Arbeitsraum (1) umfasst, **dadurch gekennzeichnet, dass** der Deckel (10) einen oben liegenden Sammler (50) umfasst, der in zumindest zwei der Schachte (11, 12, 13) mündet.

2. Elektrohaushaltsgerät zur Zubereitung von Speisen nach Anspruch 1, **dadurch gekennzeichnet, dass** der oben liegende Sammler (50) zumindest ein oben liegendes Randstück (56) aufweist, um die Nahrungsmittel zu halten.

3. Elektrohaushaltsgerät zur Zubereitung von Speisen nach einem der Ansprüche 1 oder 2, **dadurch gekennzeichnet, dass** der oben liegende Sammler (50) einen ringförmigen oben liegenden Rand (57) aufweist.

4. Elektrohaushaltsgerät zur Zubereitung von Speisen nach einem der Ansprüche 1 bis 3, **dadurch gekennzeichnet, dass** der oben liegende Sammler (50) mehrere Öffnungen (51, 52, 53) aufweist und dass jede Öffnung (51, 52, 53) in einen der Schachte (11, 12, 13) mündet.

5. Elektrohaushaltsgerät zur Zubereitung von Speisen nach einem der Ansprüche 1 bis 4, **dadurch gekennzeichnet, dass** der Deckel (10) zumindest drei Schachte (11, 12, 13) aufweist, die um eine Drehachse (28) des Arbeitswerkzeugs (20) angeordnet sind.

6. Elektrohaushaltsgerät zur Zubereitung von Speisen nach Anspruch 5, **dadurch gekennzeichnet, dass** der Deckel (10) ein Führungsorgan (15) zur Aufnahme eines zur Drehachse (28) zentrierten oberen Endes (29) des Arbeitswerkzeugs (20) umfasst, wobei das genannte Führungsorgan (15) von den Schachten (11, 12, 13) umgeben ist.

7. Elektrohaushaltsgerät zur Zubereitung von Speisen nach einem der Ansprüche 1 bis 6, **dadurch gekennzeichnet, dass** es einen Stopfer (14) zum Stopfen der Nahrungsmittel in jeden der Schachte (11, 12, 13) umfasst.

8. Elektrohaushaltsgerät zur Zubereitung von Speisen nach einem der Ansprüche 1 bis 7, **dadurch gekennzeichnet, dass** die Schachte (11, 12, 13) einen nicht kreisförmigen inneren Querschnitt aufweisen.

9. Elektrohaushaltsgerät zur Zubereitung von Speisen nach einem der Ansprüche 1 bis 8, **dadurch gekennzeichnet, dass** die Schachte (11, 12, 13) in ein- und demselben Teil (16) ausgebildet sind.

10. Elektrohaushaltsgerät zur Zubereitung von Speisen nach einem der Ansprüche 1 bis 9, **dadurch gekennzeichnet, dass** der oben liegende Sammler (50) auf die Schachte (11, 12, 13) aufgesetzt wird.

11. Elektrohaushaltsgerät zur Zubereitung von Speisen nach einem der Ansprüche 1 bis 10, **dadurch gekennzeichnet, dass** der Arbeitsraum (1) auf einem Motorgehäuse (2) angeordnet ist, das einen Antriebsausgang (3) aufweist, um das in dem Arbeitsraum (1) befindliche Arbeitswerkzeug (20) in Drehung zu versetzen.

12. Elektrohaushaltsgerät zur Zubereitung von Speisen nach einem der Ansprüche 1 bis 11, **dadurch gekennzeichnet, dass** das Arbeitswerkzeug (20) eine Pressschraube (21) bildet, die in Drehung versetzt wird, und dass der Arbeitsraum (1) ein Filterelement (40) umfasst, das eine erste die Pressschraube (21) aufnehmende Kammer (41) und eine zweite Kammer (42) zur Aufnahme zumindest eines Teils der von der Pressschraube (21) verarbeiteten Nahrungsmittel begrenzt.

13. Elektrohaushaltsgerät zur Zubereitung von Speisen nach Anspruch 12, **dadurch gekennzeichnet, dass** die Pressschraube (21) von dem Filterelement (40) umgeben ist.

14. Elektrohaushaltsgerät zur Zubereitung von Speisen nach einem der Ansprüche 12 oder 13, **dadurch gekennzeichnet, dass** die Pressschraube (21) zwei Hauptgewindegänge (22) aufweist, die zwei verschiedene Durchlässe (24) für die durch die Schachte (11, 12, 13) in den Arbeitsraum (1) eingefüllten Nahrungsmittel definieren.

15. Elektrohaushaltsgerät zur Zubereitung von Speisen nach einem der Ansprüche 1 bis 14, **dadurch gekennzeichnet, dass** der Arbeitsraum (1) zumindest einen Auslass (31, 32) zur Ausgabe zumindest eines Teils der von dem Arbeitswerkzeug (20) verarbeiteten Nahrungsmittel umfasst.

## Claims

1. Domestic electrical food preparation device with a working chamber (1) comprising a lid (10), a work tool (20) within the working chamber (1), whose lid (10) has at least two inlets (11 ; 12 ; 13) for the introduction of foodstuffs into the working chamber (1), **characterised by** its lid (10) incorporating an upper collector (50) that opens into at least two of the inlets (11 ; 12 ; 13).

2. Domestic electrical food preparation device in accordance with claim 1, **characterised by** its upper collector (50) having at least one section with a raised edge (56) to contain the foodstuffs.

3. Domestic electrical food preparation device in accordance with claim 1 or 2, **characterised by** the upper collector (50) having an annular upper edge (57).

4. Domestic electrical food preparation device in accordance with one of claims 1 to 3, **characterised by** the upper collector (50) having multiple openings (51 ; 52 ; 53), with each opening (51 ; 52 ; 53) opening into one of the inlets (11 ; 12 ; 13).

5. Domestic electrical food preparation device in accordance with one of claims 1 to 4, **characterised by** the lid (10) having at least three inlets (11 ; 12 ; 13) arranged around the axis of rotation (28) of the work tool (20).

6. Domestic electrical food preparation device in accordance with claim 5, **characterised by** the lid (10) incorporating a guide component (15) to receive the upper end (29) of the work tool (20) centred according to the axis of rotation (28), this guide component (15) being surrounded by the inlets (11 ; 12 ; 13).

7. Domestic electrical food preparation device in accordance with one of claims 1 to 6, **characterised by** its incorporating a pusher (14) to push the foodstuffs into each of the inlets (11 ; 12 ; 13).

8. Domestic electrical food preparation device in accordance with one of claims 1 to 7, **characterised by** the inlets (11 ; 12 ; 13) having non-circular internal cross-sections.

9. Domestic electrical food preparation device in accordance with one of claims 1 to 8, **characterised by** the inlets (11 ; 12 ; 13) being manufactured as a single unit (16).

10. Domestic electrical food preparation device in accordance with one of claims 1 to 9, **characterised by** the upper collector (50) being fitted onto the inlets (11 ; 12 ; 13).

11. Domestic electrical food preparation apparatus according to one of claims 1 to 10, **characterised by** the working chamber (1) being mounted on a motorised housing (2) with a drive output (3) to rotate the work tool (20) in the working chamber (1).

12. Domestic electrical food preparation apparatus according to one of claims 1 to 11, **characterised by** the work tool (20) taking the form of a pressing screw (21) driven in rotation and the working chamber (1) incorporating a filtration component (40) defining a first compartment (41) housing the pressing screw (21) and a second compartment (42) receiving at least a part of the foodstuffs processed using the pressing screw (21 ).

13. Domestic electrical household food preparation appliance according to claim 12, **characterised by** the pressing screw (21) being surrounded by the filtration component (40).

14. Domestic electrical food preparation apparatus according to one of claims 12 or 13, **characterised by** the pressing screw (21) having two main threads (22) defining two distinct passages (24) for the foodstuffs introduced into the working chamber (1) via the inlets (11 ; 12 ; 13).

15. Domestic electrical food preparation apparatus according to one of claims 1 to 14, **characterised by** the working chamber (1) incorporating at least one outlet (31 ; 32) to discharge at least a part of the foodstuffs processed by the work tool (20).
